# EUROPEAN PATENT SPECIFICATION

(11) **EP 2 274 534 B1**
(45) Date of publication and mention of the grant of the patent: **15.08.2012**
(21) Application number: 08724174.1
(22) Date of filing: 10.04.2008
(51) Int. Cl.: F16D 66/02, B60T 17/22, F16D 66/00

(54) **METHOD OF IDENTIFYING POSITIONS OF BRAKE MONITORS**
VERFAHREN ZUR IDENTIFIKATION VON POSITIONEN VON BREMSÜBERWACHUNGSVORRICHTUNGEN
PROCÉDÉ D IDENTIFICATION DES POSITIONS DES DISPOSITIFS DE SURVEILLANCE DE FREINS

(43) Date of publication of application: 19.01.2011
(73) Proprietor: Volvo Lastvagnar AB, 405 08 Göteborg (SE)
(72) Inventor: CARRESJÖ, Erik, S-442 71 Kärna (SE); HASSELBERG, Per, S-423 49 Torslanda (SE)
(74) Representative: Fröhling, Werner Otto
(86) International application number: PCT/SE2008/000261
(87) International publication number: WO 2009/126068

(56) References cited:
- EP-B1- 0 806 306
- WO-A1-01/89896
- DE-A1- 10 207 014
- GB-A- 2 266 568
- US-A- 5 602 524
- US-A1- 2002 116 992
- US-A1- 2003 214 396
- US-A1- 2004 150 516
- US-A1- 2006 042 734
- US-A1- 2008 190 712
- US-B1- 6 411 206
- US-B1- 6 501 375
- US-B1- 6 696 937

## Description

### Field of the invention

The present invention relates to methods of identifying positions of brake monitors in relation to wheel brake units of vehicles. Moreover, the present invention also concerns brake monitoring systems operable to execute aforesaid methods. Furthermore, the present invention relates to software products recording on data carriers, wherein the software products are executable on computing hardware to implement aforesaid methods.

### Background if the invention

Vehicle brakes are safety-critical components of vehicles, such that dangerous situations are susceptible to arising when vehicle brakes fail in operation. In consequence, it is known from a published international PCT patent application no. PCT/SE2006/000470 (WO 2006/112784 A1) to include monitoring devices within brake pads; the devices are operable to sense states of wear of the brake pads, and to communicate by wireless signals indicative of the states of wear. The wireless signals are receivable at control apparatus operable to generate driver information indicative of brake pad wear. When the brake pad wear approaches an unacceptable degree, the brake pads are beneficially replaced with new corresponding brake pads so that vehicle brake operation is more reliably ensured.

However, inclusion of monitoring devices in brake pads as described in the foregoing suffers problems. A first problem is that brake pads are operable to dissipate in operation significant amounts of energy which results in the brake pads momentarily being heated to elevated temperatures of potentially several hundred degrees Centigrade. Such elevated temperatures are susceptible to exceeding a maximum operating temperature of semiconductor components, for example electronic integrated circuits and electro-chemical batteries, included in the monitoring devices. A second problem is that, after installation of brake pads including corresponding wireless monitoring devices onto wheel assemblies of a vehicle, the control apparatus requires programming regarding where the brake monitors are installed on the vehicle so that a wheel assembly corresponding to a worn brake pad can be subsequently identified for purposes of replacing the worn brake pad.

The first and second problems have prevented such brake pads including monitoring devices embedded therein from finding general widespread use, despite brake pad wear continuing to be a major safety issue, especially for heavy road vehicles intended to haul freight containers and similar.

Use of other types of wireless monitoring devices is known from published patent specifications. For example, in a published United States patent no. US 5, 302, 939, there is described a dual tire equalizer having a remote indicator for a vehicle. The equalizer includes a diaphragm provided with an axial probe which is operable to selectively actuate a switch in a radio frequency transmitter circuit mounted on a wheel. The transmitter is operable to send a signal which varies in response to a condition of the switch. A radio frequency receiver on a vehicle and connected to an indicator in a driver's cab of the vehicle responds to the signal and issues appropriate information to the driver concerning condition of the equalizer.

### Summary of the invention

An object of the present invention is to provide a method of identifying positions of brake monitors for rendering use of such brake monitors easier.

According to a first aspect of the invention, there is provided a method of identifying positions of brake monitors in relation to wheel brake units of a vehicle the brake monitors being operable to communicate by wireless to at least one control apparatus of the vehicle,
characterized in that the method includes steps of:
(a) installing the brake monitors in association with the brake units;
(b) individually or group-wise actuating the brake units in a sequence whilst monitoring corresponding brake unit actuations by using the brake monitors and generating corresponding brake unit actuation signals;
(c) communicating the brake unit actuation signals from the brake monitors to the at least one control apparatus; and
(d) receiving the brake unit actuation signals at the at least one control apparatus, and identifying from the received brake unit actuation signals positions where the brake monitors are installed on the vehicle.

The invention is of advantage in that sequential actuation of the brake units and corresponding monitoring of associated signals generated by their brake monitors is capable of enabling installation positions of the brake monitors to be identified automatically.

Optionally, the method includes a step of providing each brake monitor with at least one identification code for use when communicating from the brake monitor to the at least one control apparatus, the at least one identification code enabling the brake monitor to be uniquely individually or group-wise identified by the at least one control apparatus when in communication therewith. Use of the identification code enables actuation signals subsequently generated by the brake monitor to be associated with a corresponding brake unit to which the brake monitor has been installed. Optionally, the brake monitors are uniquely identified in groups of brake monitors, for example pairs of brake monitors.

Optionally, the method is implemented such that each brake monitor is operable to monitor movement of at least one brake block of its corresponding brake unit during actuation of the brake unit. The brake monitor is thereby potentially capable of not only sensing correct actuation but also a degree of wear which the brake block has undergone in operation.

Optionally, the method is implemented such that the brake monitors are operable to function in a first hibernating state to conserve power, and a second active state for communicating an indication of actuation of their associated brake units, wherein switching between the first hibernating state and the second active state occurs for each brake monitor in association with actuation of its corresponding braking unit. Such operation of the brake monitors is of benefit when the brake monitors are powered from electrochemical batteries local thereto and also need to function from electrical energy supplied from the batteries for a period of many months or even several years.

Optionally, the method is implemented such that the brake monitors are coupled to actuators of their corresponding brake units which are operable to apply associated brake blocks, the brake monitors being mounted at locations spaced apart from the brake blocks for reducing exposure of the brake monitors to heat generated in the brake blocks when in operation. Such mounting of the brake monitors assists to reduce exposure of the brake monitors to heat generated by the brake units when in operation to absorb kinetic energy of the vehicle.

According to a second aspect of the invention, there is provided a software product stored on a data carrier the software product being executable on computing hardware for performing a method pursuant to the first aspect of the invention.

It will be appreciated that features of the invention are susceptible to being combined in any combination without departing from the scope of the invention as defined by the appended claims.

### Description of the diagrams

Embodiments of the invention will now be described, by way of example only, with reference to the following diagrams wherein:
- Figure 1: is a schematic plan view of a vehicle including a plurality of brake units associated with wheels of the vehicle, the brake units being equipped with corresponding brake monitors operable to sense operation of their brake units, and at least one control apparatus operable to communicate with the brake monitors and thereby receive information indicative of actuation of the brake units;
- Figure 2: is a schematic diagram of a brake monitor and its associated brake unit for use with the vehicle of Figure 1; and
- Figure 3: is a flow chart including steps of a method of identifying positions of brake monitors in the vehicle of Figure 1.

### Description of embodiments of the invention

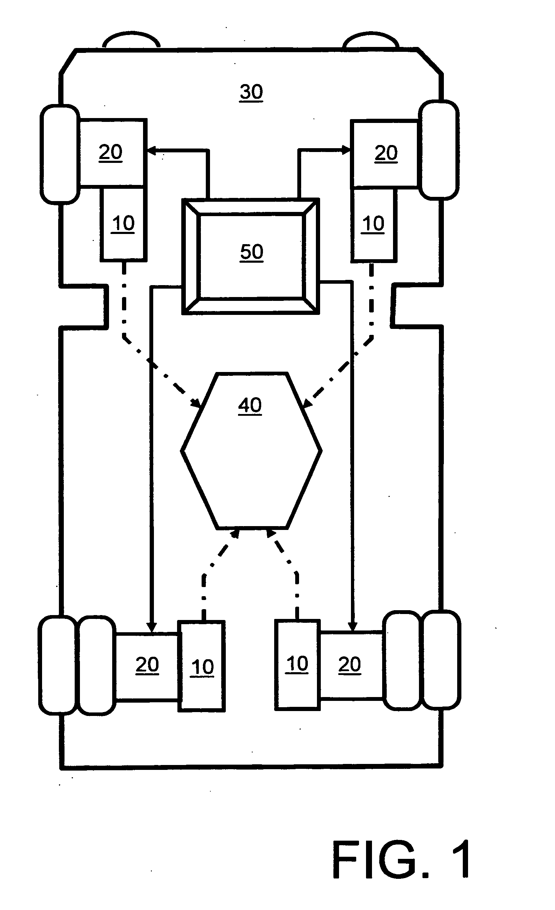

In overview, with reference to Figure 1, the present invention is concerned with a method of identifying positions of brake monitors **10** in relation to wheel brake units **20** of a vehicle **30.** The brake monitors **10** are operable to communicate by wireless to at least one control apparatus **40** of the vehicle **30.** Moreover, the method includes a first step of installing the brake monitors **10** in association with the brake units **20.** Additionally, the method includes a second step of individually or group-wise actuating the brake units **20** in a sequence whilst monitoring corresponding brake unit **20** actuations by using the brake monitors **10** and generating corresponding brake unit actuation signals. Furthermore, the method includes a third step of communicating the brake unit actuation signals from the brake monitors **10** to the at least one control apparatus **40.** Lastly, the method includes a fourth step of receiving the brake unit actuation signals at the at least one control apparatus **40,** and identifying from the received brake unit actuation signals positions where the brake monitors **10** are installed on the vehicle **30.**

The at least one control apparatus **40** is optionally a part of a safety system of the vehicle **30.** Alternatively, the at least one control apparatus **40** includes a data bus, for example implemented using a proprietary CAN bus as proposed by Philips NV in the Netherlands, through which diverse operating functions of the vehicle **30** are communicated in operation.

The present invention is, for example, relevant when the brake monitors **10** are being installed to the brake units **20.** Each brake monitor **10** is provided or allocated a reference identification code ID which the brake monitor **10** is operable to communicate to the at least one apparatus **40** by which the at least one apparatus **40** is able to uniquely identify each of the brake monitors **10.** Alternatively or additionally, the brake monitors **10** are susceptible to being identified in groups, for example in pairs, identification codes uniquely identifying such groups. Moreover, the brake units **20** are permanently coupled, namely hardwired, in communication with a braking system **50** of the vehicle **30** so that each brake unit **20,** or a group of brake units **20** such as a pair of brake units **20,** is capable of being specifically actuated. By sequentially actuating individual known brake units **20,** or groups of known brake units **20,** and recording which brake monitors **10** respond to such actuation together with corresponding reference codes ID's, the locations of the brake monitors **10** installed on the vehicle **30** can thereby be automatically determined.

Thus, when implementing the method, it is desirable that each brake monitor **10** is provided with at least one reference identification code ID for use when communicating from the brake monitor **10** to the at least one control apparatus **40,** wherein the at least one identification code enables the brake monitor **10** to be uniquely identified by the at least one control apparatus **40** when in communication therewith.

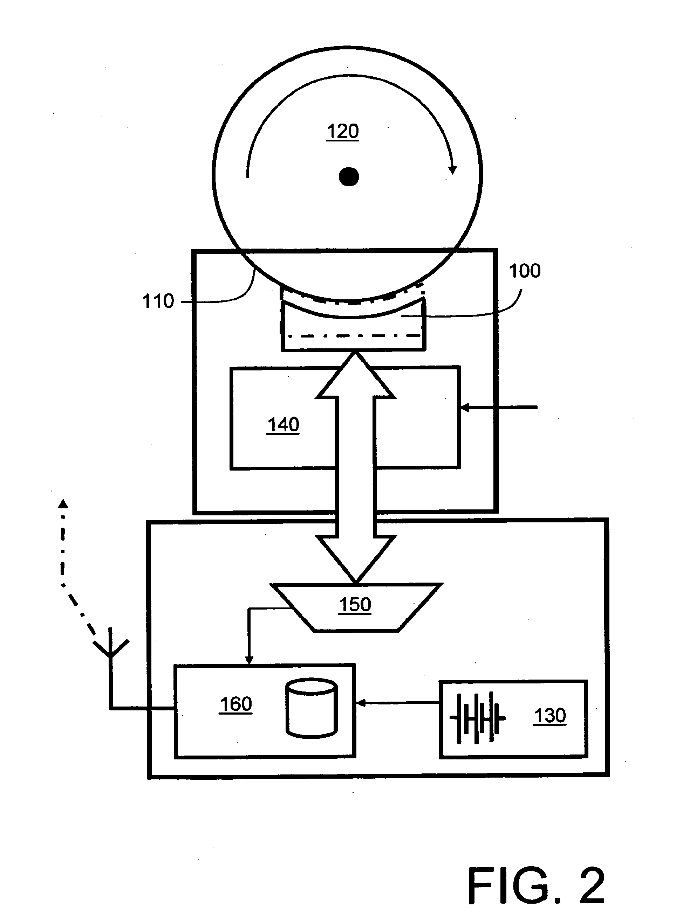

Referring to Figure 2, each brake monitor **10** is operable to monitor movement of at least one brake block **100** of its corresponding brake unit **20** during actuation of the brake unit **20.** The brake block **100** is actuated in operation towards a braking surface **110** which revolves together with a corresponding wheel **120** of the vehicle **30.** Each brake monitor **10** is optionally operable using a sensor **150** to sense a distance that its brake block **100** moves under actuation to provide a sensed indication of a degree of wear that the brake lock **100** has undergone. Such sensing using the sensor **150** is optionally achieved by using one or more of: a potentiometer, a magnetic proximity sensor, an electrostatic proximity sensor, an optical sensor, a capacitive sensor.

In order to reduce wiring complexity within the vehicle **30,** thereby potentially reduce its manufacturing cost and simplify its maintenance, the brake monitors **10** are beneficially energized by a source of power which is local thereto, for example the source of power being implemented as a battery of electrochemical cells denoted by **130.** However, it is not necessary for wheel monitoring purposes that the brake monitors **10** are continuously energized for sensing operation of their respective brake units **20.** Optionally, therefore, when implementing the method, the brake monitors **10** are operable to function in a first hibernating state to conserve power, and a second active state for communicating an indication of actuation of their associated brake units **20,** wherein switching between the first hibernating state and the second active state occurs for each brake monitor **10** in association with actuation of its corresponding braking unit **20.**

As described in the foregoing, it is beneficial that the brake monitors **10** are at least partially isolated and protected from heat-generated by operation of their corresponding brake units **20,** for example from their one or more brake blocks **100.** Thus, optionally, the brake monitors **10** are coupled to actuators **140** of their corresponding brake units **20** which are operable to apply associated one or more brake blocks **100,** wherein the brake monitors **10** are mounted at locations spaced apart from the brake blocks **100** for reducing exposure of the brake monitors **10** to heat generated in the brake blocks **100** when in operation.

When the brake monitors **10** are installed in groups, for example in pairs, and mounting positions of the groups of brake monitors **10** only need to identified pursuant to the present invention to a resolution of the groups, such that the brake monitors **10** are actuated in groups and their corresponding actuation sensing responses then recorded at the at least one apparatus **40** for identifying which groups of brake units **20** with which the group of brake monitors **10** are associated.

The at least one control apparatus **40** and the brake units **20** together with their brake monitors **10** are beneficially considered to comprise a brake monitoring system. The at least one control apparatus **40** and the brake units **20** of the system are susceptible to being individually or group-wise actuated in sequence, and the system beneficially further comprises the brake monitors **10** coupled to the brake units **20** for monitoring operation of the brake units **20;** the brake units **20** are coupled in communication with the at least one control apparatus **40** of the system, and the system is operable to implement the aforementioned method.

The method is beneficially implemented using one or more software products executable on computing hardware included at one or more of the brake monitors **10** and the at least one control apparatus **40.** The one or more software products are susceptible to being conveyed on a data carrier, for example via a signal, a solid state memory, an optical memory medium to mention a few implementations. For example, each brake monitor **10** is provided with an associated computing device **160** for directing sensing operations, sensed actuation signal conditioning and protocols for wireless communication with the at least one control apparatus **40.**

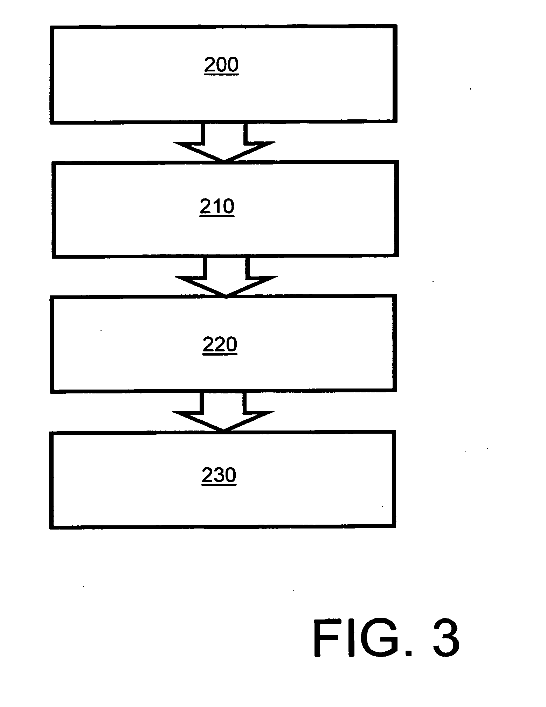

Steps of the aforementioned method are shown in Figure 3. The first step of installing the brake monitors **10** in association with the brake units **20** is denoted by **200.** Additionally, the second step of individually or group-wise actuating the brake units **20** in a sequence whilst monitoring corresponding brake unit **20** actuations by using the brake monitors 10 and generating corresponding brake unit actuation signals is denoted by **210.** Furthermore, the third step of communicating the brake unit actuation signals from the brake monitors 10 to the at least one control apparatus **40** is denoted by **220.** Lastly, the fourth step of receiving the brake unit actuation signals at the at least one control apparatus **40,** and identifying from the received brake unit actuation signals positions where the brake monitors **10** are installed on the vehicle **30** is denoted by **230.**

Although wireless communication between the brake monitors **10** and the at least one control apparatus **40,** for example via Bluetooth or similar wireless protocol, is employed, alternative communication routes are alternatively or additionally employed. Such alternative communication routes optionally include one or more of: optical communication, acoustic communication, hardwired connection.

The at least one control apparatus **40** is beneficially implemented as an arrangements of one or more monitoring apparatus, for example implemented as a brake integrity monitoring system or apparatus.

## Claims

1. A method of identifying positions of brake monitors (10) in relation to wheel brake units (20) of a vehicle, said brake monitors (10) being operable to communicate by wireless to at least one control apparatus (40) of the vehicle (30),
**characterized in that** said method includes steps of:
(a) installing said brake monitors (20) in association with said brake units (20);
(b) individually or group-wise actuating said brake units (20) in a sequence whilst monitoring corresponding brake unit actuations by using said brake monitors (10) and generating corresponding brake unit actuation signals;
(c) communicating said brake unit actuation signals from said brake monitors (10) said least one control apparatus (40); and
(d) receiving said brake unit actuation signals at said at least one control apparatus (40), and identifying from said received brake unit actuation signals positions where said brake monitors (10) are installed on said vehicle (30).

2. A method as claimed in claim 1, wherein said method includes a step of providing each brake monitor (10) with at least one identification code for use when communicating from said brake monitor (10) to said at least one control apparatus (40), said at least one identification code enabling said brake monitor (10) to be uniquely individually or group-wise identified by said at least one control apparatus (40) when in communication therewith.

3. A method as claimed in claim 1 or 2, wherein each brake monitor (10) is operable to monitor movement of at least one brake block (100) of its corresponding brake unit (20) during actuation of the brake unit (20).

4. A method as claimed in claim 1, 2 or 3, wherein said brake monitors (10) are operable to function in a first hibernating state to conserve power, and a second active state for communicating an indication of actuation of their associated brake units (20), wherein switching between said first hibernating state and said second active state occurs for each brake monitor (10) in association with actuation of its corresponding braking unit (20).

5. A method as claimed in any one of the preceding claims, wherein said brake monitors (10) are coupled to actuators (140) of their corresponding brake units (20) which are operable to apply associated brake blocks (100), said brake monitors being mounted at locations spaced apart from said brake blocks (100) for reducing exposure of said brake monitors to heat generated in said brake blocks when in operation.

6. A software product stored on a data carrier, said software product being executable on computing hardware for performing a method as claimed in any one of claims 1 to 5.

## Patentansprüche

1. Verfahren zur Identifizierung der Positionen von Bremsüberwachungseinrichtungen (10) in Bezug auf Radbremseinheiten (20) eines Fahrzeugs, wobei die Bremsüberwachungseinrichtungen (10) so betätigbar sind, dass sie mit wenigstens einem Steuergerät (40) des Fahrzeugs (30) drahtlos kommunizieren,
**dadurch gekennzeichnet, dass** das Verfahren die Schritte einschließt:
(a) Installierung der Bremsüberwachungseinrichtungen (10) in Verbindung mit den Bremseinheiten (20);
(b) individuelle oder gruppenweise Betätigung der Bremseinheiten (20) nacheinander, während unter Verwendung der Bremsüberwachungseinrichtungen (10) entsprechende Bremseinheitsbetätigungen überwacht werden, und Erzeugung entsprechender Bremseinheitsbetätigungssignale;
(c) Übermittlung der Bremseinheitsbetätigungssignale von den Bremsüberwachungseinrichtungen (10) zu dem wenigstens einen Steuergerät (40); und
(d) Empfang der Bremseinheitsbetätigungssignale an dem wenigstens einen Steuergerät (40) und Identifizierung der Positionen, an denen die Bremsüberwachungseinrichtungen (10) auf dem Fahrzeug (30) installiert sind, aus den empfangenen Bremseinheitsbetätigungssignalen.

2. Verfahren nach Anspruch 1, wobei das Verfahren einen Schritt einschließt, bei dem jede Bremsüberwachungseinrichtung (10) mit wenigstens einem Identifizierungscode zur Verwendung bei der Übermittlung von der Bremsüberwachungseinrichtung (10) zu dem wenigstens einen Steuergerät (40) versehen wird, wobei der wenigstens eine Identifizierungscode ermöglicht, dass die Bremsüberwachungseinrichtung (10) durch das wenigstens eine Steuergerät (40) individuell oder gruppenweise eindeutig identifiziert wird, wenn sie mit ihm in Verbindung steht.

3. Verfahren nach Anspruch 1 oder 2, wobei jede Bremsüberwachungseinrichtung (10) so betätigbar ist, dass sie die Bewegung wenigstens eines Bremsblocks (100) seiner entsprechenden Bremseinheit (20) während der Betätigung der Bremseinheit (20) überwacht.

4. Verfahren nach Anspruch 1, 2 oder 3, wobei die Bremsüberwachungseinrichtungen (10) so betätigbar sind, dass sie in einem ersten Ruhezustand zum Energiesparen und einem zweiten aktiven Zustand arbeiten, in dem sie eine Anzeige über die Betätigung ihrer zugeordneten Bremseinheiten (20) übermitteln, wobei das Umschalten zwischen dem ersten Ruhezustand und dem zweiten aktiven Zustand für jede Bremsüberwachungseinrichtung (10) in Verbindung mit der Betätigung ihrer entsprechenden Bremseinheit (20) erfolgt.

5. Verfahren nach irgendeinem der vorhergehenden Ansprüche, wobei die Bremsüberwachungseinrichtungen (10) mit Stellgliedern ihrer entsprechenden Bremseinheiten (20) gekoppelt sind, die so betätigbar sind, dass sie zugeordnete Bremsblöcke (100) aufbringen, wobei die Bremsüberwachungseinrichtungen an Stellen angebracht sind, die sich im Abstand zu den Bremsblöcken (100) befinden, um das Ausgesetztsein der Bremsüberwachungseinrichtungen gegenüber der in den Bremsblocks während des Betriebs erzeugten Wärme zu reduzieren.

6. Auf einem Datenträger gespeichertes Softwareprodukt, wobei das Softwareprodukt zur Durchführung eines Verfahrens nach irgendeinem der Ansprüche 1 bis 5 auf einer Computer-Hardware ausführbar ist.

## Revendications

1. Procédé d'identification de positions de dispositifs de surveillance de frein (10) par rapport à des unités de freinage de roue (20) d'un véhicule, les dispositifs de surveillance de frein (10) pouvant être activés pour communiquer sans fil avec au moins un appareil de commandes (40) du véhicule (30),
**caractérisé en ce que** le procédé comprend les étapes consistant à :
(a) installer les dispositifs de surveillance de frein (10) en association avec les unités de freinage (20) ;
(b) actionner de manière individuelle ou par groupe les unités de freinage (20) dans une séquence tout en surveillant les actionnements de l'unité de freinage correspondante en utilisant les dispositifs de surveillance de frein (10) et en produisant des signaux d'actionnement de l'unité de freinage correspondante ;
(c) communiquer les signaux d'actionnement d'unité de freinage provenant des dispositifs de surveillance de frein (10) au au moins un appareil de commande (40) ; et
(d) recevoir les signaux d'actionnement d'unité de freinage au niveau du au moins un appareil de commande (40), et identifier à partir des signaux d'actionnement d'unité de freinage reçus les positions dans lesquelles les dispositifs de surveillance de frein (10) sont installés sur le véhicule (30).

2. Procédé selon la revendication 1, dans lequel le procédé comprend une étape consistant à munir chaque dispositif de surveillance de frein (10) d'au moins un code d'identification destiné à être utilisé lors d'une communication depuis le dispositif de surveillance de frein (10) vers le au moins un appareil de commande (40), le au moins un code d'identification validant le dispositif de surveillance de frein (10) pour être identifié uniquement individuellement ou à la manière d'un groupe par le au moins un appareil de commande (40) lors d'une communication avec celui-ci.

3. Procédé selon les revendications 1 ou 2, dans lequel chaque dispositif de surveillance de frein (10) peut être actionné pour surveiller un mouvement d'au moins un bloc de frein (100) de son unité de freinage correspondante (20) pendant l'actionnement de l'unité de freinage (20).

4. Procédé selon les revendications 1, 2 ou 3, dans lequel les dispositifs de surveillance de frein (10) peuvent être actionnés pour agir dans un premier état de veille pour conserver une puissance, et un second état actif pour communiquer une indication d'actionnement de leurs unités de freinage associées (20), dans lequel une commutation entre le premier état de veille et le second état actif survient pour chaque dispositif de surveillance de frein (10) en association avec un actionnement de son unité de freinage correspondante (20).

5. Procédé selon l'une quelconque des revendications précédentes, dans lequel les dispositifs de surveillance de frein (10) sont reliés à des actionneurs (140) de leur unité de freinage correspondante (20) qui peut être actionnée pour appliquer le bloc de frein associé (100), les dispositifs de surveillance de frein étant montés dans des emplacements écartés des blocs de frein (100) pour réduire une exposition des dispositifs de surveillance de frein à une chaleur produite dans les blocs de frein lors d'un fonctionnement.

6. Produit logiciel mémorisé sur un support de données, le produit logiciel pouvant être exécuté sur un matériel informatique pour mettre en oeuvre un procédé selon l'une quelconque des revendications 1 à 5.
